# EUROPÄISCHE PATENTANMELDUNG

(11) **EP 1 840 046 A1**
(43) Veröffentlichungstag der Anmeldung: **03.10.2007**
(21) Anmeldenummer: 06006492.0
(22) Anmeldetag: 29.03.2006
(51) Int. Cl.: B65D 81/34, B65D 79/02, G01N 21/81, G01N 31/22

(54) **Verpackung mit Temperaturanzeige**

(71) Anmelder: Mondi Packaging AG, 1032 Wien (AT)
(72) Erfinder: Kastner, Friedrich, Dr., 4710 Grieskirchen (AT); Zoister, Stefan, Dipl.-Ing. (FH), 4320 Perg (AT)
(74) Vertreter: Landgraf, Elvira

(57) **Zusammenfassung**

Verpackung insbesondere eine auch mikrowellengeeignete Verpackung für Lebensmittel, Fertiggerichte, Non Food - Produkte, wie Cold-Hot-Packs, verpackte Erfrischungstücher und dergleichen bestehend aus einer flexiblen oder halbflexiblen oder starren Verpackungsform, dadurch gekennzeichnet, dass die Verpackung eine in das Verpackungsmaterial integrierte oder darauf applizierte Vorrichtung zur Anzeige der Änderung der Temperatur in Form einer Beschichtung oder einer Bedruckung die bei Kontakt mit kondensierender und/oder wieder gefrierender Feuchtigkeit eine irreversible Farbänderung zeigt, aufweist.

## Beschreibung

Die Erfindung betrifft eine Verpackung, gegebenenfalls auch mikrowellengeeignete Verpackung für insbesondere gefrorene oder gekühlte oder zu kühlende Lebensmittel, Fertiggerichte, Non Food - Produkte, wie Cold-Hot-Packs und dergleichen mit einer Temperaturanzeigevorrichtung.

Insbesondere bei gefrorenen Lebensmitteln ist eine ununterbrochene Kühlkette von der Herstellung bis zum Verbrauch notwendig um die hohe Qualität zu erhalten und die Vermehrung von Keimen zu verhindern.

Bei Antauen des gefrorenen Produktes entsteht Wasser, das sich am Produkt und der Verpackung niederschlägt und bei Erreichen der Gefriertemperatur wieder zu Eis wird. Derzeit kann ein Antauen und eine damit verbundene Qualitätsverminderung bzw. Erhöhung der Keimzahl höchstens durch das Vorhandensein einer so genannten Eis- oder Schneeschicht in der Verpackung vermutet werden.
Dabei kann der Temperaturanstieg bzw. das An- oder partielle Auftauen des Produkts während des Transports zum Handel, oder während der Lagerung im Handel oder auch während des Transports vom Handel zum Verbraucher auftreten.

Aufgabe der Erfindung war es eine Verpackung bereitzustellen, die eine Temperaturanzeigevorrichtung aufweist, durch die Temperaturanstiege, insbesondere eine Unterbrechung der Kühlkette nachgewiesen werden können.

Gegenstand der Erfindung ist daher eine Verpackung insbesondere eine auch mikrowellengeeignete Verpackung für Lebensmittel, Fertiggerichte, Non Food - Produkte, wie Cold-Hot-Packs, verpackte Erfrischungstücher und dergleichen bestehend aus einer flexiblen oder halbflexiblen oder starren Verpackungsform, dadurch gekennzeichnet, dass die Verpackung eine in das Verpackungsmaterial integrierte oder darauf applizierte Vorrichtung zur Anzeige der Änderung der Temperatur in Form einer Beschichtung oder einer Bedruckung die bei Kontakt mit kondensierender und/oder wieder gefrierender Feuchtigkeit eine irreversible Farbänderung zeigt, aufweist.

Die Vorrichtung zur Anzeige der Temperaturänderung kann direkt auf das Verpackungsmaterial, beispielsweise durch eine Bedruckung oder Beschichtung aufgebracht sein.
Dabei wird in einem definierten Bereich des Verpackungsmaterials eine Bedruckung mit einer Druckfarbe aufgebracht, die eine irreversible Farbänderung oder Färbung aufzeigt, sobald sie mit Feuchtigkeit, insbesondere kondensierendem Wasser in Kontakt tritt.

In einer weiteren Ausführungsform kann die die reaktive Druckfarbe in einer wasserlöslichen Umhüllung (beispielsweise in Form einer Mikrokapsel) eingeschlossen sein, wobei die Umhüllung bei Kontakt mit kondensierendem Wasser aufgelöst wird und die reaktive Druckfarbe freisetzt.

In einer weiteren Ausführungsform kann die temperatursensitive Druckfarbe von einer Deckschicht oder Membran überdeckt sein, die das Durchdiffundieren von Feuchtigkeit oder Wasser erlaubt, worauf die Druckfarbe in die Deckschicht migriert und so eine visuell erkennbare Färbung zeigt.

In einer besonderen Ausführungsform kann die feuchtigkeitsempfindliche Druckfarbe in Form von Mustern, Zeichen, Symbolen, Buchstaben und dergleichen vorliegen.
Ferner kann die Deckschicht in Form von Mustern, Zeichen, Symbolen, Buchstaben und dergleichen vorliegen.
In beiden alternativen Ausführungsformen ist ein An- oder Auftauen des Produkts dann durch das Sichtbarwerden der entsprechenden Muster, Zeichen, Symbole, Buchstabe und dergleichen erkennbar.

In einer weiteren Ausführungsform kann eine Druckfarbe, die nicht zwingend feuchtigsreaktiv ist, mit einer feuchtigkeitsreaktiven Beschichtung oder einer Membran abgedeckt sein.
Als feuchtigkeitsreaktive Beschichtung kommen beispielsweise EVOH, Glykose und deren Derivate, insbesondere oxidativ abgebaute Derivate, in Frage.
Bei Kontakt mit Wasser löst sich diese Beschichtung auf, oder wird zumindest lichtdurchlässig, sodass die darunter liegende Druckfarbe sichtbar wird.

In einer weiteren Ausführungsform kann auf die Oberflache der Verpackung , vorzugsweise auf der dem Produkt zugewandten Seite, ein Trägersubstrat, dass die temperatur- oder feuchtigkeitssensitive Bedruckung oder Beschichtung, gegebenenfalls in eingekapselter Form oder mit einer Deckschicht versehen, wie oben beschrieben, trägt appliziert werden.

Die Verpackung kann aus einer Mono-Schicht oder aus einem Schichtverbund bestehen.

So kann die Verpackung beispielsweise aus einer Folie aus Kunststoff, beispielsweise Polyester, wie orientiertes PET amorphes PET, Polyolefine wie Polypropylen, Cast-PP, geblasenen, gereckte, biaxial gereckte PP-Folien, oder Polyethylen, Polystyrol, Polycarbonat, Zellglas, Polyamid, Polyvinylchlorid oder deren Copolymere. Es können aber coextrudierte oder laminierte Kunststoffverbundfolien oder Verbunde mit Papier verwendet werden. Ferner ist es möglich beschichtete Folien, biologisch abbaubare Folien, Aluminiumfolien und dergleichen zu verwenden.
Die Dicke der Schicht beträgt vorzugsweise 8 - 200 µm.

In einem Folienverbund kann eine zweite oder weitere Schicht beispielsweise aus einem siegelfähigen Medium, beispielsweise aus Kunststofffolien aus Polyolefinen, wie Polyethylen, Polypropylen, aus EVOH, EVA, und/oder dessen Copolymeren oder Terpolymeren, Polystyrol, Polycarbonat, Zellglas, Polyamid, Polyvinylchlorid bestehen. Diese Schicht kann aber auch durch eine Extrusionsbeschichtung oder Lackierung der äußeren Folie mit einem der genannten Kunststoffe gebildet werden.
Die Dicke dieser Schicht beträgt vorzugsweise 0,5 -100 µm.

Zwischen diesen Schichten oder auf der ersten Schicht können gegebenenfalls Zwischenschichten situiert sein. Derartige Zwischenschichten können beispielsweise Barriereschichten, wie Aluminiumoxidschichten oder Siliciumoxidschichten, organische Barriereschichten, wie Polyamidschichten, Absorberschichten, beispielsweise Gasabsorberschichten wie O₂-, CO₂-Absorberschichten, Wasserdampfabsorberschichten, Ethylen-absorberschichten, bedruckte Schichten, Schichten, die erhöhte Flexibilität oder Festigkeit oder Steifigkeit verleihen und dergleichen sein.
Der gesamte Schichtverbund der erfindungsgemäßen Verpackung kann gegebenenfalls mehrere Zwischenschichten und Kombinationen dieser Zwischenschichten umfassen, wobei die Schichten entweder jeweils gute Haftung zueinander aufweisen oder durch Hafthilfsmittel, wie Klebemittel untereinander verbunden sein können.

In der Ausführungsform, in der erfindungsgemäß eine auf ein Trägersubstrat aufgebrachte gegebenenfalls feuchtigkeitssensitive Druckfarbe und/oder Beschichtung auf die Verpackung appliziert ist, kann das Trägersubstrat beispielsweise eine flexible Kunststofffolie aus PI, PP, MOPP, PE, PPS, PEEK, PEK, PEI, PSU, PAEK, LCP, PEN, PBT, PET, PA, PC, COC, POM, ABS, PVC sein.

Beispiele für feuchtigkeitsempfindliche Druckfarben sind wasserlösliche Farben und nicht wasserlösliche Farben, Mischfarbe, Farbumschlagsfarben, thermochrome Farben, Flüssigkristallschichten und dergleichen.

Die Verpackung kann in Form eines Beutels, einer Tasche, eines Standbeutels, eines Tablets, Sachet, Pouch oder in Form einer Siegelfolie für Behälter ausgebildet sein.

## Patentansprüche

1. Verpackung insbesondere eine auch mikrowellengeeignete Verpackung für Lebensmittel, Fertiggerichte, Non Food - Produkte, wie Cold-Hot-Packs, verpackte Erfrischungstücher und dergleichen bestehend aus einer flexiblen oder halbflexiblen oder starren Verpackungsform, **dadurch gekennzeichnet, dass** die Verpackung eine in das Verpackungsmaterial integrierte oder darauf applizierte Vorrichtung zur Anzeige der Änderung der Temperatur in Form einer Beschichtung oder einer Bedruckung die bei Kontakt mit kondensierender und/oder wieder gefrierender Feuchtigkeit eine irreversible Farbänderung zeigt, aufweist.

2. Verpackung nach Anspruch 1, **dadurch gekennzeichnet, dass** die Vorrichtung zur Anzeige der Änderung der Temperatur in Form einer Bedruckung oder einer Beschichtung vorliegt.

3. Verpackung nach einem der Ansprüche 1 bis 2, **dadurch gekennzeichnet, dass** die in Form einer Bedruckung oder Beschichtung vorliegende Vorrichtung zur Anzeige der Änderung der Temperatur durch eine feuchtigkeitsreaktive Beschichtung abgedeckt ist.

4. Verpackung nach einem der Ansprüche 1 bis 3, **dadurch gekennzeichnet, dass** die die Vorrichtung zur Anzeige der Änderung der Temperatur in Form von Mustern, Zeichen, Symbolen, Buchstaben vorliegt.

5. Verpackung nach einem der Ansprüche 1 bis 4, **dadurch gekennzeichnet, dass** die Vorrichtung zur Anzeige der Änderung der Temperatur aus einer Bedruckung oder Beschichtung aus wasserlöslichen Farben, nicht wasserlöslichen Farben, Mischfarben, Farbumschlagsfarben, thermochromen Farben, oder Flüssigkristallschichten besteht.

6. Verpackung nach einem der Ansprüche 1 bis 5, **dadurch gekennzeichnet, dass** die Verpackung aus einer oder mehreren Schichten besteht.
